# EUROPÄISCHE PATENTSCHRIFT

(11) **EP 0 832 927 B1**
(45) Veröffentlichungstag und Bekanntmachung des Hinweises auf die Patenterteilung: **24.05.2000**
(21) Anmeldenummer: 97116231.8
(22) Anmeldetag: 18.09.1997
(51) Int. Cl.: C08L 23/28, C08K 3/36

(54) **Kautschukmischung für Innenseelen von Fahrzeugluftreifen**
Pneumatic tyre inner liner rubber blend
Mélange de caoutchouc pour revêtement interne de pneumatiques

(30) Priorität: 25.09.1996 DE 19639367
(43) Veröffentlichungstag der Anmeldung: 01.04.1998
(73) Patentinhaber: Continental Aktiengesellschaft, 30165 Hannover (DE)
(72) Erfinder: Stevens, Hendrik, Dr. rer. nat., 30419 Hannover (DE)

(56) Entgegenhaltungen:
- EP-A- 0 120 833
- EP-A- 0 385 760

## Beschreibung

Die Erfindung betrifft eine Kautschukmischung insbesondere für gasundurchlässige Innenseelen von Fahrzeugluftreifen, die bezogen auf 100 Gewichtsteile der Gesamtkautschukmasse aus 60 - 95 pphr halogeniertem Butylkautschuk und 40 - 5 pphr Butylkautschuk besteht sowie Füllstoffe und weitere übliche Zusatzstoffe enthält.

Für schlauchlose Reifen ist es erforderlich, die radial innerste Schicht des Reifens gasundurchlässig auszubilden. Durch Eindiffundieren von Luft und Feuchtigkeitspartikeln aus dem Reifeninneren besteht nämlich die Gefahr, daß zumindest die nächste radial innenliegende Schicht, die im allgemeinen die Karkasse ist, beschädigt wird. Die Haftung zwischen den Festigkeitsträgern der Karkasse und dem sie umgebenden Gummimaterial wird dadurch zerstört, was letztendlich zu einem Defekt des Reifens führt. Demzufolge muß die Innenseele des Fahrzeugluftreifens nicht nur gasundurchlässig sein, sondern sie muß auch mechanisch stabil sein, damit durch Rißbildung in der Innenseele ein Eindringen von Luft und Feuchtigkeit verhindert wird.

Bisher ist bekannt, als Material für Innenseelen Mischungen aus Butylkautschuk und halogeniertem Butylkautschuk zu verwenden. In der EP 385 760 B1 sind Mischungen offenbart, die einen Anteil an halogeniertem Butylkautschuk von 60 - 95 Gewichtsprozent enthalten. Allerdings hat sich gezeigt, daß die dort erwähnten Mischungen Nachteile bezüglich der Verarbeitbarkeit der Kautschukmischungen mit sich bringen bzw. diese Innenseelen mit der benachbarten Schicht im Reifen (Karkass-Gummierung) keine ausreichende Haftung bilden.

Der vorliegenden Erfindung liegt die Aufgabe zugrunde, gasundurchlässige Innenseelen-Materialien für Fahrzeugluftreifen zur Verfügung zu stellen, die bessere Haftungseigenschaften zu anderen Gummischichten aufweisen und die gleichzeitig eine gute Verarbeitbarkeit ermöglichen.

Gelöst wird diese Aufgabe dadurch, daß die Kautschukmischung als Füllstoff nicht aktivierte Kieselsäure enthält.

Als nicht aktivierte Kieselsäure soll in dieser Anmeldung Kieselsäure verstanden werden, deren Oberfläche vor und während des Mischprozesses durch Zugabe eines Kupplungsagenz (Aktivierungsmittel), z.B. Silan, nicht chemisch modifiziert wurde.

Um eine gute Dispersion des Füllstoffs Kieselsäure in einer Kautschukmischung zu gewährleisten, werden bisher solchen Kautschukmischungen Aktivierungsmittel (im allgemeinen Silane) zugesetzt. Gleichzeitig bewirken diese Aktivierungsmittel eine gute Anbindung des Füllstoffs Kieselsäure während der Vulkanisation der Kautschukmischung zur polymeren Matrix. Um so überraschender war es festzustellen, daß durch Weglassen des Aktivierungsmittels Kautschukmischungen erhalten werden, die sowohl Vorteile bei der Herstellung dieser Mischung mit sich bringen als auch dem vulkanisierten Produkt hervorragende Eigenschaften verleihen.

Durch einen Verzicht auf das Aktivierungsmittel kann der Mischprozeß bei der Herstellung der Kautschukmischung kostengünstiger gestaltet werden. Beim Einmischen des Aktivierungsmittels müssen genaue Mischparameter wie Temperatur und Zeit eingehalten werden. Durch den Wegfall dieser Mischstufe kann somit Zeit und Energie eingespart werden. Es werden Kautschukmischungen erzielt, die eine hervorragende Klebrigkeit aufweisen, so daß eine Konfektionierung von Rohlingen in einer hohen Qualität erfolgen kann. So wird z.B. bei der Konfektionierung eines Reifenrohlings ein Verrutschen der über der Innenseele, die aus dem erfindungsgemäßen Kautschukmaterial besteht, befindlichen Kautschukschicht (Karkass-Gummierung) verhindert, so daß ein genauer Reifenaufbau ermöglicht wird. Außerdem vulkanisieren die erfindungsgemäßen Kautschukmaterialien schneller aus als die aus dem Stand der Technik bekannten. Das bedeutet, daß die Vulkanisationszeit der Kautschukmischung verkürzt wird, so daß die Herstellungszeit der Fahrzeugluftreifen verringert wird, was wiederum eine Energie- und Arbeitskosteneinsparung mit sich bringt. Des weiteren weist die erfindungsgemäße Kautschukmischung für Innenseelen im vulkanisierten Zustand einen hervorragenden Trennwiderstand auf, der ein Maß für die Verschweißbarkeit der Kautschukmischung (Innenseele) mit anderen Schichten (Gummierung der Karkasse) ist.

Überraschenderweise hat sich herausgestellt, daß als halogenierter Butylkautschuk Chlorbutylkautschuk verwendet werden kann. Im Vergleich zu Brombutylkautschuk ist Chlorbutylkautschuk weniger vernetzungsaktiv und weist bisher eine geringere Verschweißbarkeit mit anderen Kautschukmischungen auf. Trotzdem besitzt die erfindungsgemäße Kautschukmischung aus der Kombination Chlorbutyl-Butylkautschuk und nicht aktivierter (silanisierte) Kieselsäure hervorragende Eigenschaften bezüglich Verschweißbarkeit und Trennwiderstand. Prinzipiell kann natürlich auch Brombutylkautschuk als halogenierter Kautschuk verwendet werden. Der eingesetzte halogenierte Butylkautschuk besitzt einen Halogengehalt von 0,8 bis 2,8 Gewichtsprozent. Bevorzugt liegt der Halogengehalt des halogenierten Butylkautschuks zwischen 1,2 und 2,0 Gewichtsprozent, da bei niedrigeren Halogenanteilen die Verschweißbarkeit mit anderen Gummischichten (Gummierung der Karkasse) besser gewährleistet ist. Der verwendete Butylkautschuk ist ein Isobutylen-Isopren-Copolymer wie er üblicherweise bei der Herstellung von Gummiartikeln verwendet wird. So weisen die Polymerisate einen Doppelbindungsanteil von ca. 0,5 - 4 Molprozent auf.

Gemäß der Erfindung kann grundsätzlich jede fein verteilte gefällte Kieselsäure eingesetzt werden wie sie üblicherweise bei der Herstellung von Kautschukmischungen verwendet wird. In diesem Zusammenhang sei auch auf die in der EP 501 227, EP 157 703 und der DE 24 10 014 beschriebenen Kieselsäuren verwiesen. Es können demnach allgemein gefällte und fein verteilte Kieselsäuren für die erfindungsgemäße Mischungszusammensetzung verwendet werden, die eine BET-Fläche von 40 - 350 m²/g, eine CTAB-Fläche von 50 - 350 m²/g und eine DBP-Absorption von 50 - 350 ml/100 g besitzen. Auch sei auf die Kieselsäure, deren Herstellung und Eigenschaften in der DE 44 00 996 beschrieben sind, verwiesen. Die Menge an fein verteilter gefällter Kieselsäure soll zwischen 1 und 15 pphr betragen. Vorteilhafterweise wird ein Anteil an fein verteilter Kieselsäure von 5 - 10 pphr zugesetzt. Wenn mehr als 15 pphr Kieselsäure eingesetzt wird, erhöht sich die Mischungsviskosität erheblich, so daß die Verarbeitbarkeit der Kautschukmischung erschwert wird. Darüber hinaus sinkt die Lagerstabiltät der unvulkanisierten Mischung.

Als ein weiterer Füllstoff kann z.B. Ruß verwendet werden. Als Ruß sollen Typen eingesetzt werden, die eine DBPA-Zahl von 30 - 200 cm²/100 g (ASTM D 2414), eine Jodabsorptionszahl von 10 - 250 g/kg (ASTM D 1510) sowie eine CTAB-Zahl von 5 - 150 m²/g (ASTM D 3765) besitzen. Die Rußteilchen sollen einen für den Fachmann allgemein üblichen mittleren Durchmesser aufweisen. Der Rußanteil soll zwischen 40 und 90 pphr liegen.

Weiterhin sind in der erfindungsgemäßen Kautschukmischung übliche Zusatzstoffe enthalten. Als Vernetzungsagenz kommt üblicherweise Schwefel zum Einsatz. Außerdem sind der erfindungsgemäßen Kautschukmischung Vulkanisationsaktivatoren bzw. Vulkanisationsbeschleuniger und auch Weichmacher, Schutzwachse beigemengt.

Bei der Verwendung von nicht aktivierter Kieselsäure für Kautschukmischungen auf der Basis von halogeniertem Butylkautschuk und Butylkautschuk wird eine Mischung erzielt, die eine hervorragende Verarbeitbarkeit (gute Klebrigkeit, schnelle Ausvulkanisation) aufweist und gleichzeitig im vulkanisierten Zustand eine hohe Haftung zu anderen Gummischichten besitzt. Deshalb werden diese Kautschukmischungen vorteilhafterweise für Fahrzeugluftreifen eingesetzt.

Anhand der Tabellen 1 - 3 sollen Ausführungsbeispiele näher erläutert werden. Dabei dienen die Werte der Tabellen 1 und 2 als Vergleich zum erfindungsgemäßen Ausführungsbeispiel (Tabelle 3).

Die für die Verarbeitung der Kautschukmischung wichtigen Daten sind der T 90-Wert (bestimmt nach DIN 53529), der eine Aussage über die Vulkanisationsgeschwindigkeit gibt und die Messung der Kugellaufstrecke, die die Eigenklebrigkeit der Kautschukmischung charakterisiert. Bei der Bestimmung der Klebrigkeit einer Kautschukmischung (Rolling Ball Methode) rollt eine definierte Kugel (Stahl) mit einer Anfangsgeschwindigkeit über eine Prüfkörperoberfläche. Als Prüfkörper dienen planparallele kalandrierte oder gewalzte Kautschukrohmischungen von 1.000 mm Länge und 200 mm Breite. Zur Durchführung der Messung rollt eine Stahlkugel aus definierter Starthöhe von einer schiefen Ebene über die horizontale Oberfläche des Prüfkörpers. Die zurückgelegte Rollstrecke auf der Prüffläche, gemessen in mm, ist ein Maß für die Eigenklebrigkeit der Kautschukmischung.

Aus der Tabelle 3 wird ersichtlich, daß die erfindungsgemäßen Kautschukmischungen, die Kieselsäure enthalten, aber kein Kupplungsagenz (z.B. Silan), einen im wesentlichen geringeren T 90-Wert aufweisen als die restlichen Kautschukmischungen (Tabellen 1 und 2). Diese Tatsache war überraschend, denn obwohl als halogenierter Kautschuk Chlorbutylkautschuk eingesetzt wurde, der aufgrund seiner chemischen Konstitution eine geringere Reaktivität besitzt als Brombutylkautschuk, vulkanisieren die erfindungsgemäßen Kautschukmischungen mit Chlorbutylkautschuk schneller aus als Mischungen, die z.B. Brombutylkautschuk/Butylkautschuk und als Füllstoff nur Ruß bzw. aktivierte Kieselsäure (Tabellen 1 und 2) enthalten. Da somit die Vulkanisationszeit verkürzt wird, wird eine Zeit- und Energieeinsparung erzielt. Die Werte der Kugellaufstrecke der erfindungsgemäßen Kautschukmischungen (Tabelle 3) liegen unter denen des Standes der Technik. Das bedeutet, daß die Klebrigkeit der neuen Mischungen besser ist als bei den bisher bekannten. Das ermöglicht eine genaue Konfektionierung des Kautschukrohlings, so daß die Qualität des Fahrzeugluftreifen angehoben wird.

Auch nach der Vulkanisation heben sich die erfindungsgemäßen Kautschukmischungen bezüglich des Trennwiderstandes zu anderen Gummimischungen ab. So ist der Trennwiderstand (bestimmt nach DIN 53530), der ein Maß für die Verschweißbarkeit mit anderen Gummimischungen ist, der erfindungsgemäßen nichtaktivierten Kieselsäure enthaltenden Chlorbutyl-/Butylkautschukmischung (Tabelle 3) höher als z.B. bei herkömmlichen nur rußenthaltenen Brombutyl/Butylkautschukmischungen (Tabelle 1, A11, A12). Dabei müssen keine Einbußen bezüglich der Gasundurchlässigkeit oder Rißbeständigkeit hingenommen werden.

Die erfindungsgemäßen Kautschukmischungen können als Innenseelenmaterial für einen Fahrzeugluftreifen, der zumindest folgende Bauteile aufweist: einen Laufstreifen, gegebenenfalls ein darunterliegendes Gürtelpaket, eine Karkasse, deren Enden um die Wulstkerne geschlagen sind, und Seitenwände, verwendet werden. Die erfindungsgemäße gasundurchlässige Innenseele befindet sich radial unterhalb der Karkasse.

Mit der erfindungsgemäßen Kautschukmischung für Innenseelen für Fahrzeugluftreifen können die Herstellungskosten bei gleichzeitiger Qualitätserhöhung gesenkt werden.

**Tabelle 1:**

| Tab/Probe | | | | | | | |
|---|---|---|---|---|---|---|---|
| Bestandteile (pphr) | A1 | A11 | A12 | A2 | A21 | A22 | A23 |
| Butylkautschuk | - | 20 | 25 | - | 20 | 25 | 30 |
| Brombutylkautschuk | 100 | 80 | 75 | - | - | - | - |
| Chlorbutylkautschuk | - | - | - | 100 | 80 | 75 | 70 |
| Ruß N 660 | 61 | 61 | 61 | 61 | 61 | 61 | 61 |
| **Silica** (Ultrasil VN 3) | - | - | - | - | - | - | - |
| Polyglykol 1500 | - | - | - | - | - | - | - |
| **Silan** (Si 69) | - | - | - | - | - | - | - |
| Magnesia | 0,1 | 0,1 | 0,1 | 0,1 | 0,1 | 0,1 | 0,1 |
| | | | | | | | |
| Eigenschaften | | | | | | | |
| - T 90 %-Wert | 21,9 | 55,9 | 53,5 | 56 | 62,9 | 39,5 | 58,9 |
| Kugellaufstrecke [mm] | 502.3 | 431,6 | 484,4 | 288,1 | 341,6 | 335,5 | 364,7 |
| - Trennwiderstand RT | 19,98 | 20,17 | 18,37 | 19,18 | 20,63 | 19,68 | 19 |

**Tabelle 3:**

| Tab/Probe | | | | | | |
|---|---|---|---|---|---|---|
| Bestandteile (pphr) | X21 | X22 | X23 | Y21 | Y22 | Y23 |
| Butylkautschuk | 20 | 25 | 30 | 20 | 25 | 30 |
| Brombutylkautschuk | - | - | - | - | - | - |
| Chlorbutylkautschuk | 80 | 75 | 70 | 80 | 75 | 70 |
| Ruß N 660 | 51 | 51 | 51 | 41 | 41 | 41 |
| **Silica** (Ultrasil VN 3) | 5 | 5 | 5 | 10 | 10 | 10 |
| Polyglykol 1500 | 0,5 | 0,5 | 0,5 | 1 | 1 | 1 |
| **Silan** (Si 69) | - | - | - | - | - | - |
| Magnesia | 0,5 | 0,5 | 0,5 | 0,5 | 0,5 | 0,5 |
| | | | | | | |
| Eigenschaften | | | | | | |
| -T 90 %-Wert | 31,7 | 26,9 | 31,6 | 49,1 | 45,7 | 43,2 |
| Kugellaufstrecke [mm] | 123,8 | 122,2 | 130,7 | 110,1 | 95,9 | 96,6 |
| - Trennwiderstand RT | 23,02 | 20,66 | 21,25 | 21,27 | 21,62 | 22,58 |

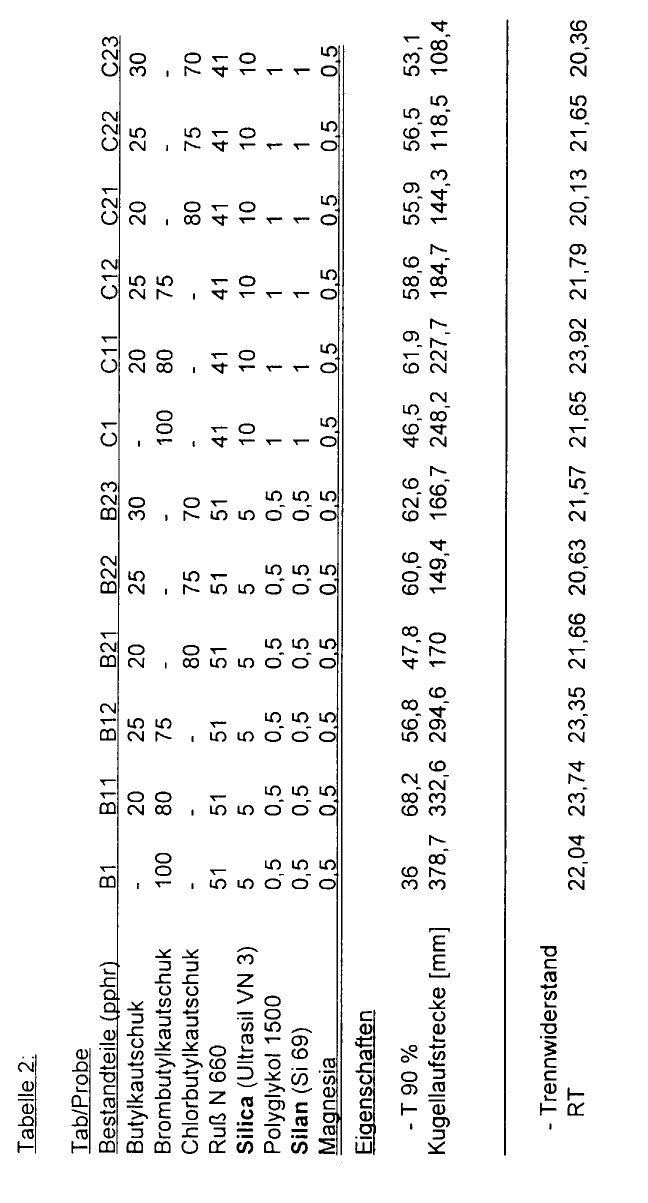

## Patentansprüche

1. Kautschukmischung für gasundurchlässige Innenseelen von Fahrzeugluftreifen, die bezogen auf 100 Gewichtsteile der Gesamtkautschukmasse aus 60 - 95 pphr halogeniertem Butylkautschuk und 40 - 5 pphr Butylkautschuk besteht sowie Füllstoffe und weitere übliche Zusatzstoffe enthält,
**dadurch gekennzeichnet**,
daß die Kautschukmischung als Füllstoff nicht aktivierte Kieselsäure enthält.

2. Kautschukmischung nach Anspruch 1, dadurch gekennzeichnet, daß der halogenierte Butylkautschuk Chlorbutylkautschuk ist.

3. Kautschukmischung nach Anspruch 1 oder 2, dadurch gekennzeichnet, daß der Halogengehalt des halogenierten Kautschuks im Bereich von 1,2 bis 2,0 Gewichtsprozent liegt.

4. Kautschukmischung nach zumindest einem der vorhergehenden Ansprüche, dadurch gekennzeichnet, daß der Anteil an nicht aktivierter feinverteilter Kieselsäure bezogen auf 100 Gewichtsteile der Gesamtkautschukmasse zwischen 1 und 15 pphr beträgt.

5. Kautschukmischung nach Anspruch 4, dadurch gekennzeichnet, daß der Anteil an nicht aktivierter Kieselsäure zwischen 5 und 10 pphr beträgt.

6. Kautschukmischung nach zumindest einem der vorhergehenden Ansprüche, dadurch gekennzeichnet, daß sie Ruß in einer Menge zwischen 40 und 90 pphr enthält.

## Claims

1. Rubber mixture for gas-impermeable inner cores of pneumatic vehicle tyres, which mixture comprises 60 - 95 pphr halogenated butyl rubber and 40 - 5 pphr butyl rubber, relative to 100 parts by weight of the total rubber composition, and contains filler substances and additional conventional additives, characterised in that the rubber mixture contains non-activated silica as the filler substance.

2. Rubber mixture according to claim 1, characterised in that the halogenated butyl rubber is chlorobutyl rubber.

3. Rubber mixture according to claim 1 or 2, characterised in that the halogen content of the halogenated rubber lies in the range between 1.2 and 2.0 per cent by weight.

4. Rubber mixture according to at least one of the preceding claims, characterised in that the proportion of non-activated, finely divided silica, relative to 100 parts by weight of the total rubber composition, is between 1 and 15 pphr.

5. Rubber mixture according to claim 4, characterised in that the proportion of non-activated silica is between 5 and 10 pphr.

6. Rubber mixture according to at least one of the preceding claims, characterised in that it contains carbon black in a quantity of between 40 and 90 pphr.

## Revendications

1. Composition de caoutchouc pour noyaux intérieurs imperméables aux gaz de pneumatiques de véhicules, qui est constituée, pour 100 parties en poids de la masse totale de caoutchouc, de 60 à 95 parties pour cent en relatif (ppcr) de caoutchouc butyle halogéné et de 40 à 5 ppcr de caoutchouc butyle et qui contient des charges et d'autres additifs usuels, caractérisée en ce que, la composition de caoutchouc ne contient pas d'acide silicique activé comme additif.

2. Composition de caoutchouc selon la revendication 1, caractérisée en ce que, le caoutchouc butyle halogéné est un caoutchouc chlorobutyle.

3. Composition de caoutchouc selon la revendication 1 ou 2, caractérisée en ce que, la concentration en halogène du caoutchouc halogéné se situe dans la gamme de 1,2 à 2,0 pour cent en poids.

4. Composition de caoutchouc selon au moins l'une des revendications précédentes, caractérisée en ce que, la proportion d'acide silicique non activé finement divisé se monte, pour 100 parties en poids de la masse totale de caoutchouc, à entre 1 et 15 ppcr.

5. Composition de caoutchouc selon la revendication 4, caractérisée en ce que, la proportion d'acide silicique non activé se monte à entre 5 et 10 ppcr.

6. Composition de caoutchouc selon au moins l'une des revendications précédentes, caractérisée en ce qu'elle contient du noir de carbone en une quantité comprise entre 40 et 90 ppcr.
